(19) **Europäisches Patentamt**
**European Patent Office**
**Office européen des brevets**

(11) **EP 2 128 951 B1**

(12) **EUROPEAN PATENT SPECIFICATION**

(45) Date of publication and mention
of the grant of the patent:
**04.03.2015 Bulletin 2015/10**

(51) Int Cl.:
***H02H 9/08*** *(2006.01)* ***H02H 3/17*** *(2006.01)*

(21) Application number: **07704751.2**

(22) Date of filing: **26.01.2007**

(86) International application number:
**PCT/ES2007/000040**

(87) International publication number:
**WO 2008/090239 (31.07.2008 Gazette 2008/31)**

(54) **ELECTRONIC ACTIVE EARTHING SYSTEM FOR USE IN HIGH-VOLTAGE DISTRIBUTION NETWORKS**

ELEKTRONISCHES AKTIVES ERDUNGSSYSTEM ZUR VERWENDUNG IN HOCHSPANNUNGS-STROMNETZEN

SYSTÈME ÉLECTRONIQUE DE MISE À LA TERRE ACTIVE DANS DES RÉSEAUX DE DISTRIBUTION À HAUTE TENSION

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**02.12.2009 Bulletin 2009/49**

(73) Proprietors:
• **Ormazabal Protection & Automation, S.L.**
**48140 Igorre Vizcaya (ES)**
• **Iberdrola Distribucion Electrica, S.A.**
**48008 Bilbao (Bizkaia) (ES)**

(72) Inventors:
• **PAZOS FILGUEIRA, Francisco, José**
**E-48008 Bilbao (bizkaia) (ES)**
• **AMEZUA AYARZA, Aitor**
**E-48160 Derio (bizkaia) (ES)**

(74) Representative: **Carpintero Lopez, Francisco et al**
**Herrero & Asociados, S.L.**
**Alcalá 35**
**28014 Madrid (ES)**

(56) References cited:
**EP-A1- 0 164 321 WO-A2-02/15355**
**DE-A1- 10 307 972 JP-A- 2000 092 698**
**JP-A- 2000 261 958 JP-A- 2006 109 567**
**JP-A- 2006 109 567**

• **WINTER K M: "Swedish distribution networks-a new method for earthfault protection in cable- and overhead systems", DEVELOPMENTS IN POWER SYSTEM PROTECTION, 1993., FIFTH INTERNATIONAL CO NFERENCE ON YORK, UK, LONDON, UK,IEE, UK, 1 January 1993 (1993-01-01), pages 268-270, XP006514559, ISBN: 978-0-85296-559-7**

**Description**

<u>Field of the Invention</u>

The present invention relates to an electronic active grounding system for a distribution network which is connectable in series to a neutral, which can be the neutral of power transformers of electrical substations or a neutral created from auxiliary elements, the purpose of which is to extinguish transient single-phase-to-ground faults, as well as to detect and locate both transient and permanent single-phase-to-ground faults in high-voltage electric power distribution systems.

<u>Background of the Invention</u>

It is a sufficiently verified fact that one of the indices measuring the level of development of a country is the power that it consumes. It is likewise simple to assume that as the power demand of a country grows, the electric generation, transport and distribution infrastructure becomes more complex and difficult to govern, complicating the control and the possible solutions to the incidents and supply blackouts, and therefore multiplying the options for solving them.

Supply blackouts and interruptions have a negative effect on the way in which the final user perceives the quality of the power supplied to him or her. A supply of said power, with a high level of quality which allows ensuring a failure-free operation of high-technology equipment, is therefore required from electric utilities. Electrical faults occupy a very important place within the different causes of interruption of the electricity supply. According to statistical data from electric utilities, most faults occurring in power systems are single-phase-to-ground faults, due to different causes: contact of trees and birds on the lines, failures in insulators, breakage of conductors, contamination from industrial activities or saline deposits in coastal areas, vandalism, etc.

Consequently, one of the most important aspects to strengthen the power system against single-phase-to-ground faults is the existence of a correct harmony between the grounding of the neutral of the transformer (operational grounding) and the different devices and the methodology used for protecting, detecting and locating single-phase electrical faults. Firstly, in relation to the safety of the installations, the treatment of the neutral has no influence on the operating voltages and currents in the networks with a symmetrical (balanced) structure and load. However, in the case of ground faults, the behavior of the network is essentially influenced by the treatment of the neutral, the fault current, the overvoltages and the operating voltages required by the equipment and the dimensions thereof having to be taken into account. The ground currents, on the one hand, affect the neighbouring systems (communications networks, gas and water distribution networks...) and, on the other hand, involve an increase of the ground potential, which can represent a hazard for people.

The technical demands of the treatment of the neutral can be divided into current-dependent demands and voltage-dependent demands.

*Current-dependent demands are:*

- Low currents
- Small electric arc effects, possibly with an automatic extinguishing of the arc.
- Small influences on other networks, for example on railway lines and telecommunication lines, gas and water distribution networks.
- Low step and touch voltages in the fault point.

*Voltage-dependent demands are:*

- Low increase of the operating voltages on the healthy conductors.
- Use of lightning arresters with a lower rated voltage.
- Preventing consecutive faults by means of a perfect insulation of the phases.
- Preventing overvoltages after igniting and extinguishing the electric arc and the connection operations.
- Preventing shifted voltages in fault-free operation even by multiple conductors.
- Preventing ferroresonances after eliminating the ground fault and during the connection maneuvers.

In addition to the previous demands, which are important from the point of view of electric utilities, from the point of view of the user it would be necessary to take into account aspects such as:

- Power supply without interruption to each consumer
- Compatibility with the power supply to industrial processes

According to the voltage level, the structure of the network and also its fault rate, all these demands cannot be completely carried out.

The treatment of the neutral of the transformers of distribution substations has a high influence in the network operation, network protection criteria and, therefore, on the quality of the supply. Said treatment of the neutral is an issue subject to continuous research for the purpose of meeting the requirements of modern systems as much as possible. Due to technical and legal aspects, the grounding method has evolved in a different manner in different countries.

The different basic technologies applied to the neutral grounding method can be summarized in the three following technologies:

- *Grounding through an impedance:* The thus inserted zero-sequence impedance can be given a value such that it limits the short-circuit current, the line voltage drop and the overvoltages in the healthy phases to predetermined values. To that end, different degrees of grounding are used, from the solidly or, indeed, grounded degree to the high-impedance degree.
- *Isolated grounding:* It is a system without intentional ground connection, except through voltage indicators, measuring devices or other equipment with very high impedance. Although it is called isolated, this system is actually coupled to ground through the distributed capacity of its phase windings and conductors. In normal conditions, the neutral of an isolated system with balanced loads will be close to the ground potential, the capacity thus being kept balanced between each phase conductor and ground.
- *Compensated or resonant grounding:* A resonantly grounded system is that in which the capacitive fault current generated by the admittances existing between the system and ground is neutralized or compensated by means of an inductive current with an identical value. This inductive current is generated by means of a reactance called compensating coil or arc suppression coil or ground fault neutralizer or Petersen coil. This type of reactance incorporates, in some cases, a motor or a manual control which allows adjusting its value according to the needs of operation of the network.

The compensated grounding method is based on the premise that when the fault current has a sufficiently low value there is a high probability that, in the event that is transient, it is self-extinguished. Starting from this basis, the main advantage of this type of grounding lies in the decrease of current circulation in the single-phase-to-ground faults, so the fault can be extinguished without the interruption of the electricity supply, provided it is not permanent.

The device for compensated grounding which is currently used is the Petersen coil, the solution defined in patent DE-304823-A, which is a solution based on a passive component, being able to be mentioned in this sense.

Based on this solution, different alternatives have been designed which, using the same idea of connection to ground by means of an inductance, have attempted to improve some of the features of the mentioned solution, especially in relation to the tuning of the coil.

One of the alternatives uses an adjustable inductance, enabling its tuning (with a limited range) according to the topology changes of the network by means of a manual control or a motor which, acting on the magnetic core, allows modifying the value of the inductance.

Another improvement for tuning the Petersen coil is obtained from applying the calculation defined in patent DE-10307668-B3, in which, by causing the circulation of two simultaneous currents with two different frequencies through the neutral, current and voltage values are obtained which allow calculating the capacity of the network in which the coil is installed and, therefore, tuning the grounded inductance according to such inductance, i.e., the current injection into the network is used for the purpose of having measurements which allow tuning a passive element (Petersen coil) which will be in charge of extinguishing the faults of the system.

In any case, all the solutions considered up until now propose control modifications in relation to a passive system which do not alter the principle of operation of the Petersen coil for extinguishing transient single-phase faults of the electric system.

A coil, as a passive system, causes a forced neutral current circulation according to the impedance which is present and to the voltage appearing in its terminals as a result of a ground fault or an unbalance between the phases. Therefore, a passive system does not have any capacity to vary the neutral current circulation at will, but rather it is imposed by the actual network and its situation.

In other words, the main drawbacks involved in using a passive system can be summarized in:

- Current circulation in the neutral and in neutral voltage-dependent fault occurring in the system.
- It is not possible to control the neutral voltage in modulus, in angle or in frequency components.
- It does not allow controlling the overvoltage generated in the neutral of the system.

Furthermore, its use involves a limitation while carrying out a series of functions:

- Difficulty in the location of the failure or fault.
- Due to the compensation carried out through an impedance in the neutral which does not allow being tuned according to the unbalances of each phase, greater symmetry requirements are imposed in the phase-ground capacities.
- The high-impedance faults are difficult to detect due to the low current circulating through the fault when the grounding of the system is compensated.
- A quick extinguishing of the fault, in the event that the latter is transient, limits the possibilities of detecting and locating it, such that once extinguished it will no longer be possible to obtain any more information in relation to it.

As an example of the state of the art can be cited the Japanese patent Application JP2006109567A which relates to a ground fault current suppressing apparatus of power distribution system. Besides, another example is described in the patent Application EP0164321A1 which relates to a device for limiting earth leakage currents in a three-phase supply network with a compensator connected between a neutral point in the network and earth.

## Description of the Invention

The invention relates to an electronic active grounding system in high-voltage distribution networks according to claim 1. The preferred embodiments of the system are described in the dependent claims.

The present invention solves the technical problem considered above by means of the electronic active grounding system defined in claim 1.

It is an essential objective of this invention to provide an electronic active grounding system, acting on the current circulation therein, controlling it at all times. This control therefore allows obtaining the desired zero-sequence current at the desired time, a feature used by the system to develop a series of functions. Furthermore, unlike what occurs in passive systems, it is not the network itself, nor the unbalance which may exist therein, nor the fault caused together with the grounding impedances, which imposes the current flowing through the neutral, but rather it is the actual grounding system which defines it. This definition includes the choice of both the modulus and the angle, as well as of the frequency components.

It is another object of the present invention to provide an electronic active grounding system controlling the current flowing through the grounding, achieving extinguishing transient single-phase to ground faults in the network by means of injecting current of network frequency $f0$ (of 50 Hz or 60 Hz), and for both transient and permanent single-phase to ground faults, identifying the line at fault and the phase at fault, detecting high-impedance faults and locating the faults by means of the suitable choice of the frequency components injection, which allows obtaining more accurate and more stable measurements on network magnitudes.

The system of the invention thus allows obtaining a controlled neutral voltage for the time required by the user and thus aiding in the corrective maintenance and allowing the preventive and predictive maintenance of high-voltage overhead lines and electric distribution cables by means of checking the insulation of the electric system.

The invention relates to an electronic grounding system which is connectable in series with a neutral and with the grounding of a power transformer in any of its possible configurations (neutral point of the transformer, neutral point of a separate grounding transformer, neutral point of a neutral creating transformer (zig-zag, Ynd...) or grounding impedance, resistance, reactance as well as a combination) feeding one or more lines in a high-voltage distribution network. According to a first aspect of the invention, it is an electronic active grounding system configured to act on a current flowing through said grounding, for which it comprises:

- means for injecting a current which is controlled at all times in amplitude, phase and frequency components into said grounding.

Said means for injecting a controlled current comprise:

- at least one voltage capturing element and at least one current capturing element, said voltage and current capturing elements being connected to obtain the following measurements:

  - $\overline{V_N}$: neutral voltage measured as the voltage drop between the neutral and ground of the network, the frequency component of which at frequency $f$ is $\overline{V_N^f}$ ;

- $\overline{I_N}$: neutral current measured directly in the neutral of the network, the frequency component of which at frequency $f$ is $\overline{I_N^f}$ ;

- $\overline{I_{0L}}$: zero-sequence current of each line of the network measured in each of the such lines, the frequency component of which at frequency $f$ is $\overline{I_{0L}^f}$ ; and,

- $\overline{U_{ref}}$ : reference magnitude corresponding to the measurement of a phase-to-phase voltage of the mentioned network;

the system further comprising:

- at least one protection and control system receiving the captured magnitudes $\overline{V_N}$, $\overline{I_N}$, $\overline{I_{0L}}$, $\overline{U_{ref}}$ of the at least one voltage capturing element and of the at least one current capturing element, and which is configured to calculate a value of said current to be injected depending on which function of a pre-established group of functions the system is configured for,

- and at least one electronic converter element the output of which is connected in series with said neutral, which is configured to generate said current to be injected, the value of which is calculated by the protection and control system, which electronic converter is configured to inject a current the frequency of which is between 5 and *f0* Hz and the value of which is less than 20% of the capacitive current of the network, and with such current the total equivalent capacitive impedance of the network at the frequency component $f$, $X_C^f$, and then at *f0*, $X_C^{f0}$, is calculated as:

$$X_C^f = \frac{V_N^f}{I_N^f} \cdot sin\left(\Phi_{V_N^f} - \Phi_{I_N^f}\right)$$

$$\rightarrow X_C^{f0} = \frac{f}{f0} \cdot \left(X_C^f - X_{PAT}^{f0} \cdot \frac{f}{f0}\right)$$

where

$X_{PAT}^f$ is the total equivalent inductive impedance of the neutral of the network of frequency component $f$

$\Phi_{V_N^f}$ is the angle of neutral voltage of frequency component $f$

$\Phi_{I_N^f}$ z is the angle of neutral current of frequency component $f$.

The electronic active grounding system can comprise a power supply system providing said electronic converter with voltage and current so that said electronic converter delivers a predetermined power depending on which function the system has been configured for, said function taken from a group of pre-established functions.

The capacity of injecting a controlled current into the grounding enables choosing the instant in which it occurs. Said choice allows the active system, and therefore also a user thereof, to decide to execute the different functions related to the protection of the high-voltage electric distribution installations and carrying out a corrective, preventive and predictive maintenance of said installations, which are defined below:

*1) Calculation of the capacity of the network*

The calculation of the capacity of the network in which the active grounding system has been installed allows obtaining the value of the total equivalent capacity of the network ($X_c$). As previously mentioned, the electronic converter is configured to inject a current the frequency of which is between 5 Hz and *f0* Hz and the value of which is not greater than 20% of the capacitive current of the network and, based on the measurement of said current, the total equivalent capacitive impedance of the network of the frequency component $f$, $X_C^f$, and with it, the capacity at $f0$ Hz, are calculated:

$$X_C^f = \frac{V_N^f}{I_N^f} \cdot sin\left(\Phi_{V_N^f} - \Phi_{I_N^f}\right)$$

$$\rightarrow X_C^{f0} = \frac{f}{f0} \cdot \left(X_C^f - X_{PAT}^{f0} \cdot \frac{f}{f0}\right)$$

where

$X_{PAT}^f$ is the total equivalent inductive impedance of the neutral of the network of frequency component $f$

$\Phi_{V_N^f}$ is the angle of neutral voltage of frequency component $f$

$\Phi_{I_N^f}$ z is the angle of neutral current of frequency component $f$

In addition, and complementarily to the previous manner, the natural unbalance of the electric system ($\overline{V_{NUnbal}}$) is measured for the purpose of obtaining the contribution made by said unbalance on the total capacity and being able to take it into account in the different modes of operation or functions and, therefore, calculations which are carried out.

It is necessary for the active grounding system to calculate said total capacity of the network to carry out a suitable injection during the maintenance mode and to extinguish the fault.

*2) Location of a single-phase fault*

The location of both a permanent and a transient single-phase fault can include all or only some of the functions which allow locating it.

The system allows determining the existence of a single-phase fault by carrying out the following verification of an overvoltage in the neutral in effective voltage values at $f0$ Hz:

$$\left|\overline{V_N^{f0}}\right| - \left(\left|\overline{I_n^{fo}}\right| \cdot X_{PAT}^{f0}\right) > V_{N\_threshold}$$

where

$X_{PAT}^{f0}$ is the total equivalent inductive impedance of the neutral of the network at $f0$ Hz

$V_{N\_threshold}$ is a pre-established threshold voltage, adjusted by the user and the value of which depends on the configuration of the network, on the impedance in the grounding and on the natural unbalance of the network.

Based on the detection of a single-phase fault, the active grounding system allows identifying which phase has a fault, both in permanent and transient faults, by comparing the angle of the neutral voltage measured at $f0$ Hz, $\overline{V_N^{f0}}$,

If the phase-to-phase voltage $\overline{U_{RS}}$ is taken as a reference:

- when the $\overline{V_N^{f0}}$ angle is between 300° and 60°, it indicates that the fault is in phase B;

- when *the* $\overline{V_N^{f0}}$ angle is between 60° and 180°, it indicates that the fault is in phase A;

- when the $\overline{V_N^{f0}}$ angle is between 180° and 300°, it indicates that the fault is in phase C.

The system can identify faulted line, both at permanent and transient faults. To that end, a controlled current of frequency $f$ is injected and the following verification is carried out for each of the lines of the network:

$$R = \left(\frac{V_N^f}{I_{OL}^f}\right) \cdot \cos\left(\Phi_{V_N^f} - \Phi_{I_{OL}^f}\right)$$

$$X = \left(\frac{V_N^f}{I_{OL}^f}\right) \cdot sin\left(\Phi_{V_N^f} - \Phi_{I_{OL}^f}\right)$$

$$\left.\left|\frac{X}{R}\right|\right._{stored} \cdot (\%\_\mathrm{var}\_setting) < \left.\left|\frac{X}{R}\right|\right._{current}$$

where

$f$ is a frequency component between 5 and $f0$ Hz,

%_var_*setting* is the setting with which the user defines the variation allowed for it to be considered a fault situation.

Furthermore, it also allows measuring the distance up to the fault point, both in permanent and transient faults. To that end, a controlled current of frequency $f$ is injected with which the following calculations can be carried out to obtain the distance value according to the impedance of the line:

$$\overline{Z_{OL}^f} = \frac{\overline{V_N^f}}{\overline{I_{OL}^f}} \; \rightarrow \; R_{OL} = \overline{Z_{OL}^f} \cdot cos(\Omega_{Z_{OL}^f}) \; \text{ and } \; X_{OL}^f = \overline{Z_{OL}^f} \cdot sin(\Omega_{Z_{OL}^f})$$

$$\overline{Z_{OL}^{f0}} = R_{OL} + X_{OL}^f \cdot \frac{f}{f0}$$

$$Distance\_to\_fault = \frac{\overline{Z_{OL}^{f0}}}{Z_{kmline}}$$

where

$Z_{kmline}$ is the impedance of the line at fault in ohm/km;

$f$ is a frequency component between $f0$ Hz and 1000 Hz; and

$\Omega_{Z_{OL}^f}$ is the angle of the impedance $Z_{OL}^f$ calculated.

*3) Extinguishing a transient single-phase fault*

Once a transient single-phase fault in the network has been detected and located, the latter only in the event that the user requires it, such fault is extinguished. To that end, the current which must flow through the neutral for the voltage in the phase at fault to be cancelled is calculated. This injection will cause the circulation of a very low current through the fault, allowing the latter to be self-extinguished.

The current of $f0$ Hz to be injected when the natural unbalance of the system is not taken into account will be:

$$\overline{I_{inject}} = \overline{I_{FaultExtinguishing}} = \left( \frac{\overline{U_{ref}/\sqrt{3}}}{X_C^{f0}} \right) \cdot 1\angle\Omega$$

(it is offset an angle $\Omega$ with respect to $\overline{U_{ref}}$)

if the phase-to-phase voltage $\overline{U_{RS}}$ is taken as $\overline{U_{ref}}$, $\Omega$ will be:

    60° if the fault is in phase A
    300° if the fault is in phase B
    180° if the fault is in phase C.

*4) Maintenance mode*

This mode of operation allows carrying out the predictive maintenance of the network in which the active grounding system is installed since, by means of the suitable injection of current, the neutral point of the network is taken to the desired voltage, creating the corresponding overvoltages and/or undervoltages in each of the phases of the network. This mode of operation allows checking the insulation and the leakages which may exist in the distribution cables and lines of the electric system.

The system thus allows the controlled and for an indefinite time modification of the phase-to-ground and neutral-to-ground network voltages by means of injecting a current of *f0* Hz calculated from the following expressions:

Current to compensate the natural unbalance of the network:

$$\overline{I_{CompNatUnbal}} = \frac{\overline{V_{NUnbal}}}{-j \cdot X_C^{f0}}$$

the $I_{compNaUnbal}$: $\Omega_{compNaUnbal}$ angle resulting in $= \Omega_{NUnbal} +90°$

Current to obtain a desired voltage:

$$\overline{I_{VDesired}} = \frac{-\overline{V_{VDesired}}}{-j \cdot X_C^{f0}}$$

the $I_{VDesired}$: $\Omega_{VDesired}$ angle resulting in$= \Omega_{VDesired}-90°$

where $\overline{V_{VDesired}}$ is the voltage to which the neutral of the network is to be subjected.

Therefore, the current to be injected by the converter would be:

$$\overline{I_{to\_inject}} = \overline{I_{CompNatUnbal}} + \overline{I_{VDesired}}$$

An important improvement of the present invention over current resonant grounding (or compensated neutral, or Petersen coil) systems is that the fault can be located for both permanent faults and transient faults which are extinguished by the action of the electronic active grounding system.

Since it uses signals of different frequencies, the system can detect high-impedance faults which conventional protection systems cannot detect. This involves a great advantage compared to most current systems with regard to the corrective maintenance of high-voltage overhead distribution lines.

The electronic active grounding system of the invention can also incorporate advanced measurement functions which allow detecting leakages in insulators which are not faults which can be detected by conventional protections, or contacts of external elements with the line which do not cause the action of the protection relays. This functionality of the electronic active grounding system provides an aid in the predictive maintenance since it identifies potential fault situations in the electric system.

By means of injecting a current at the network frequency *f0,* controlled in amplitude and phase, the electronic active grounding system allows extinguishing the transient single-phase to ground faults occurring in the high-voltage network in which it is connected, independently and without limiting the possible topology changes thereof.

In the event that the network makes it necessary to compensate its own unbalance, such compensation is provided by the electronic active grounding system for the purpose of minimizing the current of the fault and increasing the possibilities of its extinction.

In addition, the capacity to inject current at the network frequency with controlled amplitude and phase allows the user of the electronic active grounding system to control the phase-ground and neutral-ground voltages of the high-voltage system to which it is connected. This allows reducing or increasing in a controlled manner the phase-ground voltages and therefore, the voltages which are applied to elements of the network connected between the phases and ground. A reduction of the voltage with respect to ground in one of the phases allows the voltage applied to the insulators thereof to be lower, such the appearance of a single-phase-to-ground fault can be prevented. On the other hand, by increasing the voltage of a phase against ground, the appearance of a fault can be intentionally facilitated or caused, and it can be maintained in the network such that it can be located and corrected by maintenance staff, without interrupting the supply to the customers. These situations can be indefinitely maintained, provided that the voltages in the other phases do not cause faults in the electric power system.

Despite using the premise of compensated systems for extinguishing the arc and therefore clearing the transient faults, the operation of the network by means of medium or high impedance is maintained, a feature which allows getting rid of the drawback of lack of reliability and sensitivity of a compensated system of those currently used.

It is additionally possible to extend for a minimum time the extinguishing of a fault in order to detect and locate it (only in the event that the user requires it) before it disappears.

Finally, it is necessary to take into account that the electronic active grounding system does not include any mechanical element which can be damaged or require certain maintenance for adapting it to the changing conditions of the operation of the network.

Description of the Drawings

To complement the description which is being made and with the aim of aiding to better understand the features of the invention according to a preferred practical embodiment thereof, a set of drawings is attached as an integral part of said description in which the following has been shown with an illustrative and nonlimiting character:

Figure 1 schematically shows different passive grounding systems for grounding the neutral of power transformers known in the state of the art.

Figure 2 shows a single-line diagram of a possible connection of a power transformer to the substation busbar, a possible arrangement of the electronic active grounding system of the invention and the lines, fed by the transformer, connected to the busbar.

Figure 3 shows a schematic representation of a possible embodiment of the electronic active grounding system object of the invention.

Preferred Embodiment of the Invention

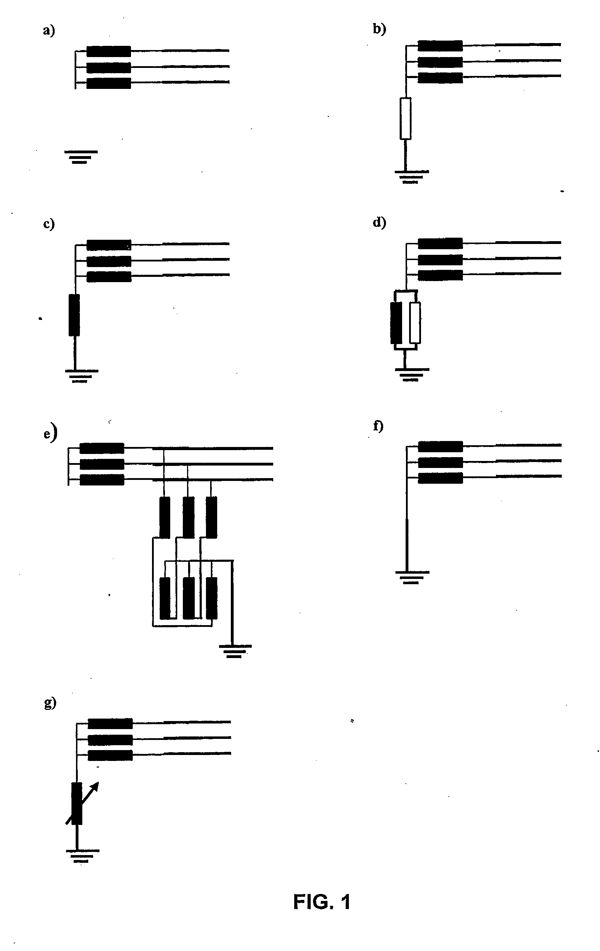

Figure 1 schematically shows different passive grounding systems for grounding the neutral of power transformers that are usual in the state of the art:

a) Isolated system.
b) Grounding by means of resistive impedance.
c) Grounding by means of reactive impedance.
d) Grounding by means of combined resistance and reactance impedance.
e) Grounding by means of reactance or zig-zag transformer.
f) Solid grounding.
g) Grounding by means of a compensation coil or Petersen coil.

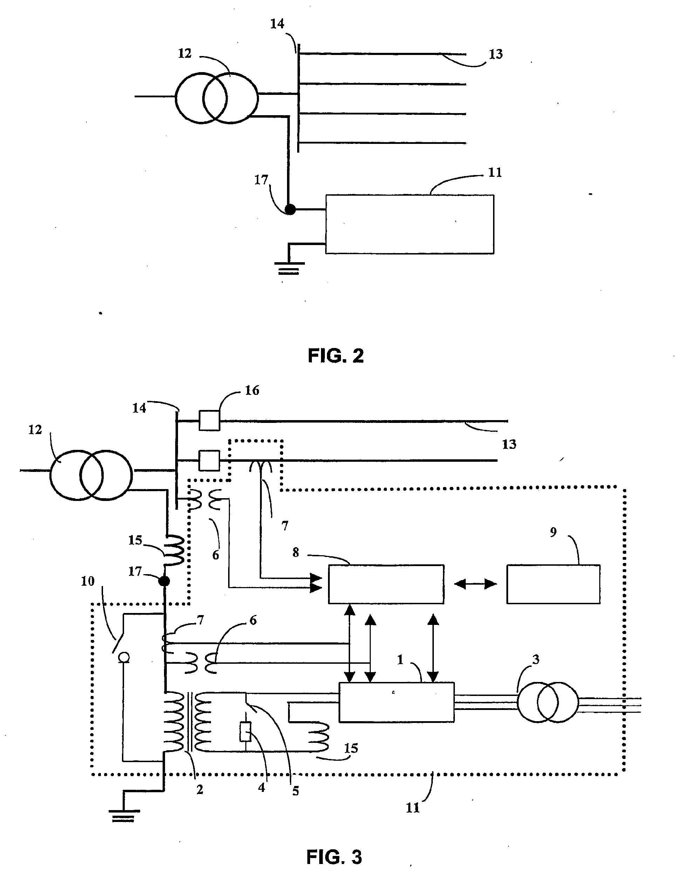

Figure 2 shows a simplified single-line diagram of a possible connection of a power transformer (12) to the busbar (14) of a substation of an electric distribution network from which a series of lines (13) are fed, as well as a possible arrangement of the electronic active grounding system (11) of the invention in relation to the neutral (17) of the network.

The electronic active grounding system (11) object of the invention in a possible embodiment shown in Figure 3 comprises a single-phase electronic converter (1), a series coupling transformer (2), a power supply system (3), a resistance (4), an inductance (15) in the secondary of the coupling transformer (2), a protection and control system (8), voltage sensing elements (6), current capturing elements (7), a user interface (9) and a maneuvering element (10) to bridge the system, such as a by-pass switch.

The active grounding system (11) can be formed as a system contained in a single enclosure or by independent envelopment, being able to be assembled and tested in the factory, minimizing the installation and connection operations on site and ensuring a higher reliability in the operation of the system.

## Connection of the different elements of the electronic active grounding system

The mission of the series coupling transformer (2) is to adapt the voltage and configuration of the electronic converter (1) to the power system of the substation. A single-phase transformer is the most usual although, depending on the features of the substation, it may not be necessary or a transformer with different features may be required.

The primary winding of the coupling transformer (2) is connected in series with the ground or ground impedance-directly or through any system -and the neutral (17) of the network. This neutral (17) can be both the neutral of the power transformer (12) of the electrical substation in any of its possible configurations (star of the transformer, star of a separate grounding transformer, ...), and a neutral created from auxiliary elements: star of a transformer creating a neutral based on a zig-zag connection, star of a transformer creating a Ynd connection, a resistive or inductive grounding impedance (15) or a combination thereof, etc.

The output of the single-phase electronic converter (1) is connected in the secondary winding of the coupling transformer (2), which converter generates a current of different frequencies according to the needs of the system, an impedance (15) being able to be connected in series and/or parallel thereto.

A resistance (4) is connected and disconnected in parallel with the electronic converter (1) by means of a contactor (5), for the purpose of damping transients against a fault in the system.

The power supply system (3) supplies the necessary power to the electronic active grounding system (11) for its operation.

The output of the electronic converter (1) is formed by a single-phase direct current to alternating current inverter. The electronic converter (1) provides alternating current at the frequency or combination of frequencies required at each time by the protection and control system (8), this protection and control system (8) being able to be connected to the electronic converter (1) or integrated therein, such that it has a physically distributed or concentrated architecture. This feature allows the system to be adapted to the different needs of electrical substations.

The electronic active grounding system (11) has voltage capturing elements (6) and current capturing elements (7) providing the measurements of the magnitudes of the lines (13) connected to the busbar (14) of the substation, as well as the measurements of the magnitudes of voltage between neutral and ground and the current flowing through the grounding. The capturing elements (6, 7) can be outside the system, therefore the ones that are best adapted to the loads and voltages can be installed in each installation.

To make the maximum use of the functionality which this electronic active grounding system (11) can provide, there is a user interface (9) by means of which all the information obtained by the active grounding system (11) is collected, the data used by it is updated, its operation is defined and the condition of the electric system assembly is checked.

For the purpose of leaving the electronic active grounding system (11) out of service for maintenance operations on the electric system, or for the operation of the substation in a neutral regimen excluding active grounding-either due to operation criteria or due to possible failures in the electronic active grounding system (11) -the latter includes a maneuvering element or by-pass switch (10) bridging the primary of the coupling transformer (2), allowing to continue with the operation of the substation without needing to modify the settings of the installed protections or the operation of the system.

The electronic active grounding system (11) can be contained in a single envelopment, only the grounding wiring of the power transformer (12), the input for the power supply of the system, the user interface (9), the wiring of the signals of the voltage capturing elements (6) and current capturing elements (7) and the signal of control of the by-pass switch (10) being accessible.

The electronic active grounding system (11) is furthermore provided with one (or more) user interface (9), which can include an assembly formed by a keyboard, screen and communications port for connecting a data terminal equipment and/or data communication system, even a software allowing the user to obtain data about the operation of the system, obtain operation parameters thereof and program of the parameters.

## Functions of the electronic active grounding system

The electronic active grounding system (11) described allows carrying out functions related to the protection of high-voltage electric distribution installations, as well as corrective, preventive and predictive maintenance of said installations, the functions which can be carried out being grouped into the following:

*1) Calculation of the capacity of the network*

To calculate the capacity of the network, the electronic converter (1) injects a current the frequency of which is in a range between *f0* Hz and 5 Hz. The value of the current is sufficiently low to not cause any disturbance in the electric system, especially taking into account that the overvoltage caused in the neutral increases with the decrease of the frequency component which is injected. Therefore, it is not greater than 20% of the capacitive current of the network, but neither is it lower than the accuracy of the measuring elements (6, 7, 8 and 1).
This calculation is carried out based on the following general equations:

$$X_C^f = \frac{V_N^f}{I_N^f} \cdot sin\left(\Phi_{V_N^f} - \Phi_{I_N^f}\right)$$

$$\rightarrow X_C^{f0} = \frac{f}{f0} \cdot \left(X_C^f - X_{PAT}^{f0} \cdot \frac{f}{f0}\right)$$

where

$X_C^f$ is the total equivalent capacitive impedance of the network of frequency component *f*

$X_{PAT}^f$ i is the total equivalent inductive impedance of the neutral of the network of frequency component *f*

$\Phi_{V_N^f}$ is the angle of neutral voltage of frequency component *f*

$\Phi_{I_N^f}$ is the angle of neutral current of frequency component *f*

Once the previous value has been obtained, the injection of current into the neutral (17) will be stopped.
After each calculation of the total equivalent capacity of the network, it is necessary to obtain the natural unbalance of the electric system, as both values complement one another. This value corresponds to the measured neutral voltage when there is no injection or no fault in the system: $\overline{V_{NUnbal}}$.

*2) Location of a single-phase fault*

*a) Detection of the existence of a single-phase fault*

The main function determining the existence of a single-phase fault in the electric system is the verification of an overvoltage in the neutral, i.e., when the voltage measured in the neutral exceeds a threshold which will be defined by the user (setting) and which will depend on the configuration of the network, on the impedance in the ground connection and on the natural unbalance of the network.
The following verification is carried out in the effective voltage value at *f0* Hz:

$$\left|\overline{V_N^{f0}}\right| - \left(\left|\overline{I_n^{fo}}\right| \cdot X_{PAT}^{f0}\right) > V_{N\_threshold}$$

*b) Detection of the phase at fault*

Once the existence of a single-phase fault in the electric system has been detected, the phase at fault is determined by means of comparing the angle of the neutral voltage measured at *f0* Hz $\left(\overline{V_N^{f0}}\right)$:

If the phase-to-phase voltage U$_{RS}$ is taken as a reference:

- when the $\overline{V_N^{f0}}$ angle is between 300° and 60° → The fault will be in phase B

- when the $\overline{V_N^{f0}}$ angle is between 60° and 180° → The fault will be in phase A

- when the $\overline{V_N^{f0}}$ angle is between 180° and 300° → The fault will be in phase C

*c) Detection of the line (13) at fault*

Once the fault situation has been detected, a controlled current of frequency between *f0* Hz and 5 Hz. Said injection of current at a frequency less than that of the network allows improving the accuracy of the obtained values of the resistive component with respect to the reactive component ($X = 1/(2.\pi.f.\ C)$) of the network. Furthermore, as they are non-natural frequencies of the network, there are no contributions of the loads of the electric system and it allows discriminating the affected line.

The current to be injected must be sufficiently low so that the voltage caused by the injection does not entail dangerous values for the operation of the electric system, i.e., it will be less than 20% of the capacitive current of the network, but greater than the minimum value to be accurately measured by the measuring elements (6, 7, 8 and 1).

The detection of the line (13) at fault is obtained from the following verification for each of the lines of the network:

$$R = \left(\frac{V_N^f}{I_{0L}^f}\right) \cdot \cos\left(\Phi_{V_N^f} - \Phi_{I_{0L}^f}\right)$$

$$X = \left(\frac{V_N^f}{I_{0L}^f}\right) \cdot \sin\left(\Phi_{V_N^f} - \Phi_{I_{0L}^f}\right)$$

$$\left|\frac{X}{R}\right|_{stored} \cdot \left(\%\_\mathrm{var}\_setting\right) < \left|\frac{X}{R}\right|_{current}$$

where

*f* is a frequency component between 5 and *f0* Hz

%_var_*setting* is the setting with which the user will define the variation allowed for it to be considered a fault situation.

*c) Location of the fault*

To locate the fault, a current of frequency between *f0* Hz and 1,000 Hz is injected into the neutral. This frequency range allows improving the measurement of the inductances compared to the capacities. In addition, the overvoltage caused in the neutral during the injection is less with the increase of the frequency, therefore it will be possible to carry out injections in a range between 10% and 100% of the capacitive current.

From a series of calculations based on the proportionality between the distance to the fault and the measured fault impedance, said distance values are obtained according to the impedance of the line (13):

$$\overline{Z_{0L}^f} = \frac{\overline{V_N^f}}{I_{0L}^f} \ \rightarrow \ R_{0L} = \overline{Z_{0L}^f} \cdot \cos(\Omega_{Z_{0L}^f}) \ \text{ and } \ X_{0L}^f = \overline{Z_{0L}^f} \cdot \sin(\Omega_{Z_{0L}^f})$$

$$\overline{Z_{0L}^{f0}} = R_{0L} + X_{0L}^f \cdot \frac{f}{f0}$$

$$Distance\_to\_fault = \frac{\overline{Z_{0L}^{f0}}}{Z_{kmline}}$$

where

$Z_{kmline}$ is the impedance of the line at fault in ohm/km;

$f$ is a frequency component between $f0$ Hz and 1000 Hz; and

$\Omega_{Z_{0L}^f}$ is the angle of the impedance $Z_{0L}^f$ calculated.

*3) Extinguishing of single-phase faults*

To extinguish a fault, a current is injected which is calculated from the capacity of the network which, when the natural unbalance of the system is not taken into account, will be:

$$\overline{I_{inject}} = \overline{I_{FaultExtinguishing}} = \left( \frac{\overline{U_{ref}/\sqrt{3}}}{X_C^{f0}} \right) \cdot 1 \angle \Omega$$

(it is offset an angle $\Omega$ with respect to $\overline{U_{ref}}$)

if the phase-to-phase voltage $\overline{U_{RS}}$ is taken as $\overline{U_{ref}}$, $\Omega$ will be:

60° if the fault is in phase A
300° if the fault is in phase B
180° if the fault is in phase C.

*4) Maintenance mode*

The control of the neutral voltage for the purpose of placing said value in that required to carry out the maintenance forces taking into account the natural unbalance of the system ($\overline{V_{NUnbal}}$). The current to be injected by the electronic active grounding system (11) will be the vector sum of the two currents calculated as indicated below.

Current to compensate the natural unbalance of the network:

$$\overline{I_{CompNatUnbal}} = \frac{\overline{V_{NUnbal}}}{-j \cdot X_C^{f0}}$$

the angle of $I_{compNatUnbal}$: $\Omega_{compNatUnbal}$ resulting in = $\Omega_{NUnbal}$ +90°

Current to obtain a desired voltage:

$$\overline{I_{VDesired}} = \frac{-\overline{V_{VDesired}}}{-j \cdot X_C^{f0}}$$

the angle of $I_{VDesired}$: $\Omega_{VDesired}$ resulting in= $\Omega_{VDesired}$ -90°

where

$\overline{V_{VDesired}}$ is the voltage to which the neutral of the network is to be subjected.

Therefore, the current to be injected by the converter would be:

$$\overline{I_{to\_inject}} = \overline{I_{CompNatUnbal}} + \overline{I_{VDesired}}$$

**Claims**

1. Electronic grounding system which is connectable in series with a neutral (17) and with the grounding of a power transformer (12) in any of its possible configurations in a high-voltage distribution network, wherein said electronic grounding system is an electronic active grounding system (11) configured to act on a current flowing through said grounding, said electronic active grounding system (11) comprising means for injecting a current which is controlled at all times in amplitude, phase and frequency components into said grounding, wherein said means for injecting a current comprise at least one voltage capturing element (6) and at least one current capturing element (7), - and at least one protection and control system (8) receiving the captured magnitudes ($\overline{V_N}$, $\overline{I_N}$, $\overline{I_{0L}}$, $\overline{U_{ref}}$), of the at least one voltage capturing element (6) and of the at least one current capturing element (7), and which is configured to calculate a value of said current to be injected, **characterized in that** said voltage and current capturing elements (6, 7) are configured to obtain the following measurements:

   - $\overline{V_N}$: neutral voltage measured as the voltage drop between the neutral (17) and ground of the network, the frequency component of which at frequency $f$ is $\overline{V_N^f}$ ;

   - $\overline{I_N}$: neutral current measured directly in the neutral of the network, the frequency component of which at frequency $f$ is $\overline{I_N^f}$ ;

   - $\overline{I_{0L}}$ : zero-sequence current of each line (13) of the network measured in each of such lines, the frequency component of which at frequency $f$ is $\overline{I_{0L}^f}$ and,

   - $\overline{U_{ref}}$: reference magnitude corresponding to the measurement of a phase-to-phase voltage of the mentioned network,

   the electronic active grounding system (11) further comprising:

   - at least one electronic converter element (1) the output of which is connected in series with said neutral (17), which is configured to generate said current the value of which is calculated by the protection and control system (8), which electronic converter (1) is configured to inject a current the frequency of which is between 5 and $f0$ Hz, being for the nominal network frequency, and the value of which is less than 20% of the capacitive current of the network, and with such current the total equivalent capacitive impedance of the network at the frequency component $f$, $X_C^f$, and then at $f0$, $X_C^{f0}$, is calculated as:

   $$X_C^f = \frac{V_N^f}{I_N^f} \cdot sin\left(\Phi_{V_N^f} - \Phi_{I_N^f}\right)$$

   $$\rightarrow X_C^{f0} = \frac{f}{f0} \cdot \left(X_C^f - X_{PAT}^{f0} \cdot \frac{f}{f0}\right)$$

   where

   $X_{PAT}^f$ is the total equivalent inductive impedance of the neutral of the network of frequency component $f$

   $\Phi_{V_N^f}$ is the angle of neutral voltage of frequency component $f$ $\Phi_{I_N^f}$ is the angle of neutral current of frequency component $f$.

2.  System according to claim 1, **characterized in that** it further comprises a power supply system (3) providing said electronic converter (1) with voltage and current so that it carries out the corresponding injection according to the function which is to be carried out.

3.  System according to any of claims 1-2, **characterized in that** it allows determining the existence of both a permanent and transient single-phase fault by carrying out the following verification of an overvoltage in the neutral in effective voltage values at *f0* Hz:

$$\left|\overline{V_N^{f0}}\right| - \left(\left|\overline{I_n^{fo}}\right| \cdot X_{PAT}^{f0}\right) > V_{N\_threshold}$$

where

$X_{PAT}^{f0}$ is the total equivalent inductive impedance of the neutral of the network at *f0* Hz

$V_{N\_threshold}$ is a pre-established threshold voltage, adjusted by the user and the value of which depends on the configuration of the network, on the impedance in the grounding and on the natural unbalance of the network.

4.  System according to any of claims 1-2, **characterized in that** it allows identifying which phase has a fault, both at permanent and transient faults by comparing the angle of neutral voltage measured at *f0* Hz $\overline{V_N^{f0}}$, and if the phase-to-phase voltage $\overline{U_{RS}}$ is taken as $\overline{U_{ref}}$:

  • when the $\overline{V_N^{f0}}$ angle is between 300° and 60°, it indicates that the fault is in a phase B;

  • when the $V_N^{f0}$ angle is between 60° and 180°, it indicates that the fault is in a phase A;

  • and when the $\overline{V_N^{f0}}$ angle is between 180° and 300°, it indicates that the fault will be in a phase C.

  •

5.  System according to any of claims 1-4, **characterized in that** it allows identifying which phase has a fault, both at permanent and transient faults, for which a controlled current of frequency *f* is injected, and the following verification is carried out for each of the lines (13) of the network:

$$R = \left(\frac{V_N^f}{I_{0L}^f}\right) \cdot \cos\left(\Phi_{V_N^f} - \Phi_{I_{0L}^f}\right)$$

$$X = \left(\frac{V_N^f}{I_{0L}^f}\right) \cdot \sin\left(\Phi_{V_N^f} - \Phi_{I_{0L}^f}\right)$$

$$\left|X/R\right|_{stored} \cdot \left(\%\_var\_setting\right) < \left|X/R\right|_{current}$$

where

*f* is a frequency component between 5 and *f0* Hz
%_var_*setting* is the setting with which the variation allowed for it to be considered a fault situation is defined.

6.  System according to any of claims 1-2, **characterized in that** it allows measuring the distance to the fault point, both in permanent and transient faults, for which a controlled current of frequency *f* is injected with which the following calculations can be carried out to obtain the distance value according to the impedance of the line:

$$\overline{Z_{0L}^{f}} = \frac{\overline{V_{N}^{f}}}{\overline{I_{0L}^{f}}} \;\;\rightarrow\;\; R_{0L} = \overline{Z_{0L}^{f}} \cdot cos(\Omega_{Z_{0L}^{f}}) \;\; and \;\; X_{0L}^{f} = \overline{Z_{0L}^{f}} \cdot sin(\Omega_{Z_{0L}^{f}})$$

$$\overline{Z_{0L}^{f0}} = R_{0L} + X_{0L}^{f} \cdot \frac{f}{f0}$$

$$Distance\_to\_fault = \frac{\overline{Z_{0L}^{f0}}}{Z_{kmline}}$$

where

$Z_{kmline}$ is the impedance of the line at fault in ohm/km;
$f$ is a frequency component between $f0$ Hz and 1000 Hz; and

$\Omega_{Z_{0L}^{f}}$ i is the angle of the impedance $Z_{0L}^{f}$ calculated.

7. System according to any of claims 1-2, **characterized in that** it allows extinguishing a transient single-phase fault in the network by means of a controlled injection of intensity into neutral calculated to cancel the voltage of the phase at fault.

8. System according to any of claims 1-2, **characterized in that** it allows the controlled modification and for an indefinite time of the phase-ground and neutral-ground voltages of the network by means of injecting a current of $f0$ Hz calculated from the following expressions:

Current to compensate the natural unbalance of the network:

$$\overline{I_{CompNatUnbal}} = \frac{\overline{V_{NUnbal}}}{-j \cdot X_{C}^{f0}}$$

the angle of $I_{compNatUnbal}$: $\Omega_{compNatUnbal}$ resulting in = $\Omega_{NUnbal}$ +90°
Current to obtain a desired voltage:

$$\overline{I_{VDesired}} = \frac{-\overline{V_{VDesired}}}{-j \cdot X_{C}^{f0}}$$

the angle of $I_{VDesired}$: $\Omega_{VDesired}$ resulting in= $\Omega_{VDesired}$-90°
where $\overline{V_{VDesired}}$ is the voltage to which the neutral of the network is to be subjected.
Therefore, the intensity to be injected by the converter would be:

$$\overline{I_{to\_inject}} = \overline{I_{CompNatUnbal}} + \overline{I_{VDesired}}$$

9. System according to any of the previous claims, wherein said system (11) is included in a single envelopment.

10. System according to any of the previous claims, wherein said system is included in independent envelopments.

11. System according to any of claims 1-10, wherein said neutral (17) is a neutral of the power transformer (12).

12. System according to any of claims 1-11, wherein said neutral is a neutral created from auxiliary elements.

**Patentansprüche**

1. Elektronisches Erdungssystem, das in beliebigen seiner möglichen Aufbauten in einem Hochspannungsverteilungsnetz in Reihe mit einem Nullleiter (17) und mit der Erdung eines Netztransformators (12) verbindbar ist, wobei das elektronische Erdungssystem ein elektronisches aktives Erdungssystem (11) ist, das aufgebaut ist, um auf einen durch die Erdung fließenden Strom zu wirken, wobei das elektronische aktive Erdungssystem (11) Einrichtungen aufweist, um einen Strom, dessen Amplitude, Phase und Frequenzkomponenten jederzeit gesteuert werden, in die Erdung einzuspeisen, wobei die Einrichtungen zum Einspeisen eines Stroms wenigstens ein Spannungserfassungselement (6) und wenigstens ein Stromerfassungselement (7) und wenigstens ein Schutz- und Steuersystem (8) aufweisen, das die erfassten Größen ($\overline{V_N}$, $\overline{I_N}$, $\overline{I_{OL}}$, $\overline{U_{ref}}$) des wenigstens einen Spannungserfassungselements (6) und des wenigstens einen Stromerfassungselements (7) empfängt und das aufgebaut ist, um einen Wert des Stroms, der eingespeist werden soll, zu berechnen, **dadurch gekennzeichnet, dass** die Spannungs- und Stromerfassungselemente (6, 7) aufgebaut sind, um die folgenden Messungen zu erhalten:

- $\overline{V_N}$: Nullleiterspannnung, die als der Spannungsabfall zwischen dem Nullleiter (17) und der Erde des Netzes gemessen wird, deren Frequenzkomponente bei der Frequenz $f$ $\overline{V_N^f}$ ist;

- $\overline{I_N}$: Nullleiterstrom, der direkt in dem Nullleiter des Netzes gemessen wird, dessen Frequenzkomponente bei der Frequenz $f$ $\overline{I_N^f}$ ist;

- $\overline{I_{0L}}$: Nullstrom jeder Leitung (13) des Netzes, der in jeder derartigen Leitung gemessen wird, dessen Frequenzkomponente bei der Frequenz $f$ $\overline{I_{0L}^f}$ ist;

- $\overline{U_{ref}}$: Referenzbetrag, welcher der Messung einer Phasen-Phasen-Spannung des erwähnten Netzes entspricht,

wobei das elektronische aktive Erdungssystem (11) ferner aufweist:

- wenigstens ein elektronisches Wandlerelement (1), dessen Ausgang in Reihe mit dem Nullleiter (17) geschaltet ist, das aufgebaut ist, um den Strom zu erzeugen, dessen Wert durch das Schutz- und Steuersystem (8) berechnet wird, wobei der elektronische Wandler (1) aufgebaut ist, um einen Strom einzuspeisen, dessen Frequenz zwischen 5 und f0 Hz liegt, wobei f0 die Nennfrequenz des Netzes ist, und der Wert dessen kleiner als 20% des kapazitiven Stroms des Netzes ist, und wobei bei einem derartigen Strom die äquivalente gesamte kapazitive Impedanz des Netzes bei der Frequenzkomponente $f$ $X_C^f$, und dann bei $f0$ $X_C^{f0}$ berechnet wird als

$$X_C^f = \frac{V_N^f}{I_N^f} \cdot \sin\left(\Phi_{V_N^f} - \Phi_{I_N^f}\right)$$

$$\text{-->} \ X_C^{f0} = \frac{f}{f0} \cdot \left(X_C^f - X_{PAT}^{f0} \cdot \frac{f}{f0}\right)$$

wobei $X_{PAT}^f$ die gesamte äquivalente induktive Impedanz des Nullleiters des Netzes der Frequenzkompo-nente f ist,

$\Phi_{V_N^f}$ der Winkel der Nullleiterspannung der Frequenzkomponente f ist,

$\Phi_{I_N^f}$ der Winkel des Nullleiterstroms der Frequenzkomponente f ist.

2. System nach Anspruch 1, **dadurch gekennzeichnet, dass** es ferner ein Leistungsversorgungssystem (3) aufweist, das den elektronischen Wandler (1) mit Spannung und Strom versorgt, so dass er die entsprechende Einspeisung gemäß der Funktion, die ausgeführt werden soll, ausführt.

3. System nach einem der Ansprüche 1 - 2, **dadurch gekennzeichnet, dass** es die Bestimmung sowohl eines permanenten als auch eines transienten Einphasenfehlers zulässt, indem die folgende Überprüfung einer Überspannung in dem Nullleiter in den effektiven Spannungswerten bei f0 Hz ausgeführt wird:

$$\left| \overline{V_N^{f0}} \right| - \left( \left| \overline{I_N^{f0}} \right| \cdot X_{PAT}^{f0} \right) > V_{N\_Schwellwert}$$

wobei $X_{PAT}^{f0}$ die gesamte äquivalente induktive Impedanz des Nullleiters des Netzes bei f0 Hz ist,

$V_{N\_schwellwert}$ eine vorher festgelegte Schwellwertspannung ist, die von dem Benutzer eingestellt wird und deren Wert von dem Aufbau des Netzes, von der Impedanz in der Erdung und von dem natürlichen Ungleichgewicht des Netzes abhängt.

4. System nach einem der Ansprüche 1 - 2, **dadurch gekennzeichnet, dass** es sowohl bei permanenten als auch transienten Fehlern die Bestimmung zulässt, welche Phase einen Fehler hat, indem der Winkel der bei f0 Hz gemessenen Nullleiterspannung $\overline{V_N^{f0}}$ verglichen wird, wobei die Phasen-Phasen-Spannung $\overline{U_{RS}}$ als $\overline{U_{ref}}$ genommen wird:

- wenn der $\overline{V_N^{f0}}$-Winkel zwischen 300° und 60° ist, zeigt dies an, dass der Fehler in einer Phase B ist;

- wenn der $\overline{V_N^{f0}}$-Winkel zwischen 60° und 180° ist, zeigt dies an, dass der Fehler in einer Phase A ist;

- und wenn der $\overline{V_N^{f0}}$-Winkel zwischen 180° und 300° ist, zeigt dies an, dass der Fehler in einer Phase C ist.

5. System nach einem der Ansprüche 1 - 4, **dadurch gekennzeichnet, dass** es sowohl bei permanenten als auch transienten Fehlern die Bestimmung zulässt, welche Phase einen Fehler hat, wofür das ein gesteuerter Strom mit der Frequenz f eingespeist wird, und wobei die folgende Überprüfung für jede der Leitungen (13) des Netzes ausgeführt wird:

$$R = \left( \frac{V_N^f}{I_{0L}^f} \right) \cdot \cos \left( \Phi_{V_N^f} - \Phi_{I_{0L}^f} \right)$$

$$X = \frac{V_N^f}{I_{0L}^f} \cdot \sin \left( \Phi_{V_N^f} - \Phi_{I_{0L}^f} \right)$$

$$|X/R|_{gespeichert} \cdot \left( \%_{var_{soll}} \right) < |X/R|_{aktuell}$$

wobei f eine Frequenzkomponente zwischen 5 und f0 Hz ist,

%_var_soll als die Festlegung definiert ist, bei der erlaubt wird, dass die Schwankung als eine Fehlersituation betrachtet werden soll.

6. System nach einem der Ansprüche 1 - 2, **dadurch gekennzeichnet, dass** es sowohl bei permanenten als auch transienten Fehlern die Messung des Abstands zu dem Fehlerpunkt zulässt, wofür das ein gesteuerter Strom mit der Frequenz f eingespeist wird, wobei die folgenden Berechnungen ausgeführt werden können, um den Abstandswert gemäß der Impedanz der Leitung zu erhalten:

$$\overline{Z_{0L}^f} = \frac{\overline{V_N^f}}{\overline{I_{0L}^f}} \; \rightarrow \; R_{0L} = \overline{Z_{0L}^f} \cdot \cos\left(\Omega_{Z_{0L}^f}\right) \text{ und } \; X_{0L}^f = \overline{Z_{0L}^f} \cdot \sin\left(\Omega_{Z_{0L}^f}\right)$$

$$\overline{Z_{0L}^f} = R_{0L} + X_{0L}^f \cdot \frac{f}{f0}$$

$$Abstand\_zu\_Fehler = \frac{\overline{Z_{0L}^{f0}}}{\overline{Z_{kmLeitung}}}$$

wobei $Z_{kmLeitung}$ die Impedanz der fehlerhaften Leitung in Ohm/km ist;

f eine Frequenzkomponente zwischen f0 Hz und 1000 Hz ist; und

$\Omega_{Z_{0L}^f}$ der Winkel der berechneten Impedanz $Z_{0L}^f$ ist.

7. System nach einem der Ansprüche 1 - 2, **dadurch gekennzeichnet, dass** es das Auslöschen eines transienten Einphasenfehlers in dem Netz mit Hilfe einer gesteuerten Intensitätseinspeisung in den Nullleiter zulässt, die berechnet wird, so dass die Spannung der fehlerhaften Phase aufgehoben wird.

8. System nach einem der Ansprüche 1 - 2, **dadurch gekennzeichnet, dass** es für eine unbegrenzte Zeit die gesteuerte Modifikation der Phasen-Erde- und Nullleiter-Erde-Spannungen mit Hilfe der Einspeisung eines Stroms von f0 Hz zulässt, der aus den folgenden Ausdrücken berechnet wird:

Strom zur Kompensation des natürlichen Ungleichgewichts des Netzes:

$$\overline{I_{CompNatUnbal}} = \frac{\overline{V_{NUnbal}}}{-j \cdot X_C^{f0}}$$

wobei der Winkel von $I_{compNatUnbal}$ : $\Omega_{compNatUnbal}$ : $\Omega_{NUnbal}$ + 90° ergibt

Strom, um eine gewünschte Spannung zu erhalten:

$$\overline{I_{Vgewünscht}} = \frac{-\overline{V_{Vgewünscht}}}{-j \cdot X_C^{f0}}$$

wobei der Winkel von $I_{vgewünscht}$: $\Omega_{Vgewünscht}$ $\Omega_{Ngewünscht}$ - 90° ergibt wobei $\overline{V_{Vgewünscht}}$ die Spannung ist, welcher der Nullleiter des Netzes ausgesetzt werden soll.

Daher wäre die Intensität, die von dem Wandler eingespeist werden soll:

$$\overline{I_{einspeis}} = \overline{I_{CompNatUnbal}} + \overline{I_{Vgewünscht}}$$

9. System nach einem der vorhergehenden Ansprüche, wobei das System (11) in einer einzigen Umhüllung enthalten ist.

10. System nach einem der vorhergehenden Ansprüche, wobei das System in unabhängigen Umhüllungen enthalten ist.

11. System nach einem der Ansprüche 1 - 10, wobei der Nullleiter (17) ein Nullleiter des Netztransformators (12) ist.

12. System nach einem der Ansprüche 1 - 11, wobei der Nullleiter ein Nullleiter ist, der aus Hilfselementen erzeugt ist.

**Revendications**

1. Système de mise à la terre électronique qui est connectable en série avec un neutre (17) et avec la terre d'un transformateur de puissance (12) dans l'une quelconque de ses configurations possibles dans un réseau de distribution à haute tension, dans lequel ledit système de mise à la terre électronique est un système de mise à la terre actif électronique (11) configuré pour agir sur un courant circulant à travers ladite terre, ledit système de mise à la terre actif électronique (11) comprend des moyens pour injecter un courant qui est commandé à tous moments en composantes d'amplitude, de phase et de fréquence dans ladite terre, dans lequel lesdits moyens pour injecter un courant comprennent au moins un élément de capture de tension (6) et au moins un élément de capture de courant (7), et au moins un système de protection et de commande (8) recevant les grandeurs capturées ($\overline{V_N}$, $I_N$, $I_{0L}$, $U_{ref}$), du au moins un élément de capture de tension (6) et du au moins un élément de capture de courant (7), et qui est configuré pour calculer une valeur dudit courant à injecter, **caractérisé en ce que** lesdits éléments de capture de tension et de courant (6, 7) sont configurés pour obtenir les mesures suivantes :

- $\overline{V_N}$ : tension de neutre mesurée comme la chute de tension entre le neutre (17) et la terre du réseau, dont la composante fréquentielle à la fréquence *f* est $\overline{V_N^f}$ ;

- $\overline{I_N}$ : courant de neutre mesuré directement dans le neutre du réseau, dont la composante fréquentielle à la fréquence *f* est $\overline{I_N^f}$ ;

- $\overline{I_{0L}}$ : courant homopolaire de chaque ligne (13) du réseau mesuré dans chacune de telles lignes, dont la composante fréquentielle à la fréquence *f* est $\overline{I_{0L}^f}$ et,

- $\overline{U_{ref}}$ : grandeur de référence correspondant à la mesure d'une tension phase-phase du réseau mentionné,

le système de mise à la terre actif électronique (11) comprenant en outre :

- au moins un élément de convertisseur électronique (1) dont la sortie est connectée en série avec ledit neutre (17), qui est configuré pour générer ledit courant dont la valeur est calculée par le système de protection et de commande (8), lequel convertisseur électronique (1) est configuré pour injecter un courant dont la fréquence se situe entre 5 et *f0* Hz, *f0* étant la fréquence de réseau nominale, et dont la valeur est inférieure à 20 % du courant capacitif du réseau, et avec un tel courant l'impédance capacitive équivalente totale du réseau à la composante fréquentielle *f*, $X_C^f$, et ensuite à *f0*, $X_C^{f0}$, est calculée comme :

$$X_C^f = \frac{V_N^f}{I_N^f} \cdot sin\left(\Phi_{V_N^f} - \Phi_{I_N^f}\right)$$

$$\rightarrow X_C^{f0} = \frac{f}{f0} \cdot \left(X_C^f - X_{PAT}^{f0} \cdot \frac{f}{f0}\right)$$

où $X_{PAT}^f$ est l'impédance inductive équivalente totale du neutre du réseau de composante fréquentielle *f*

$\Phi_{V_N^f}$ est l'angle de tension de neutre de composante fréquentielle *f*

$\Phi_{I_N^f}$ ᵢ est l'angle de courant de neutre de composante fréquentielle *f*.

**2.** Système selon la revendication 1, **caractérisé en ce qu'**il comprend en outre un système d'alimentation (3) fournissant audit convertisseur électronique (1) une tension et un courant de sorte qu'il effectue l'injection correspondante selon la fonction qui doit être effectuée.

**3.** Système selon l'une quelconque des revendications 1 à 2, **caractérisé en ce qu'**il permet de déterminer l'existence d'à la fois un défaut monophasé permanent et transitoire en effectuant la vérification suivante d'une surtension dans le neutre en valeurs de tension efficace à *f0* Hz :

$$\left|\overline{V_N^{f0}}\right| - \left(\left|\overline{I_n^{f0}}\right| \cdot X_{PAT}^{f0}\right) > V_{N\_threshold}$$

où $X_{PAT}^{f0}$ est l'impédance inductive équivalente totale du neutre du réseau à *f0* Hz

$V_{N\_threshold}$ est une tension de seuil préétablie, ajustée par l'utilisateur et dont la valeur dépend de la configuration du réseau, de l'impédance dans la terre et du déséquilibre naturel du réseau.

**4.** Système selon l'une quelconque des revendications 1 à 2, **caractérisé en ce qu'**il permet d'identifier quelle phase a un défaut, à la fois au niveau de défauts permanents et transitoires en comparant l'angle de tension de neutre mesuré à *f0* Hz $\overline{V_N^{f0}}$ , et si la tension phase-phase $\overline{U_{RS}}$ est prise comme $\overline{U_{ref}}$ :

- lorsque l'angle $\overline{V_N^{f0}}$ se situe entre 300° et 60°, cela indique que le défaut est dans une phase B ;

- lorsque l'angle $\overline{V_N^{f0}}$ se situe entre 60° et 180°, cela indique que le défaut est dans une phase A ;

- et lorsque l'angle $\overline{V_N^{f0}}$ se situe entre 180° et 300°, cela indique que le défaut sera dans une phase C.

**5.** Système selon l'une quelconque des revendications 1 à 4, **caractérisé en ce qu'**il permet d'identifier quelle phase a un défaut, à la fois au niveau de défauts permanents et transitoires, pour lesquels un courant commandé de fréquence f est injecté, et la vérification suivante est effectuée pour chacune des lignes (13) du réseau :

$$R = \left(\frac{V_N^f}{I_{0L}^f}\right) \cdot cos\left(\Phi_{V_N^f} - \Phi_{I_{0L}^f}\right)$$

$$X = \left(\frac{V_N^f}{I_{0L}^f}\right) \cdot sin\left(\Phi_{V_N^f} - \Phi_{I_{0L}^f}\right) \, .$$

$$\left|\frac{X}{R}\right|_{stored} \cdot (\%\_var\_setting) < \left|\frac{X}{R}\right|_{current}$$

où $f$ est une composante fréquentielle entre 5 et f0 Hz

%_var_*setting* est le réglage avec lequel la variation admise pour qu'il soit considéré comme une situation de défaut est définie.

**6.** Système selon l'une quelconque des revendications 1 à 2, **caractérisé en ce qu'**il permet de mesurer la distance jusqu'au point de défaut, à la fois dans des défauts permanents et transitoires, pour lesquels un courant commandé de fréquence $f$ est injecté avec lequel les calculs suivants peuvent être effectués pour obtenir la valeur de distance en fonction de l'impédance de la ligne :

$$\overline{Z_{0L}^f} = \frac{\overline{V_N^f}}{\overline{I_{0L}^f}} \;\rightarrow\; R_{0L} = \overline{Z_{0L}^f} \cdot cos(\Omega_{Z_{0L}^f}) \;\text{ et }\; X_{0L}^f = \overline{Z_{0L}^f} \cdot sin(\Omega_{Z_{0L}^f})$$

$$\overline{Z_{0L}^{f0}} = R_{0L} + X_{0L}^f \cdot \frac{f}{f0}$$

$$Distance\_to\_fault = \frac{\overline{Z_{0L}^{f0}}}{Z_{kmline}}$$

où $Z_{kmline}$ est l'impédance de la ligne au niveau du défaut en ohm/km ;

f est une composante fréquentielle entre $f0$ Hz et 1000 Hz ; et

$\Omega_{Z_{0L}^f}$ est l'angle de l'impédance $Z_{0L}^f$ calculée.

**7.** Système selon l'une quelconque des revendications 1 à 2, **caractérisé en ce qu'**il permet l'extinction d'un défaut monophasé transitoire dans le réseau au moyen d'une injection d'intensité commandée dans le neutre calculée pour annuler la tension de la phase au niveau du défaut.

**8.** Système selon l'une quelconque des revendications 1 à 2, **caractérisé en ce qu'**il permet la modification commandée et pendant un temps indéfini des tensions phase-terre et neutre-terre du réseau au moyen de l'injection d'un courant de $f0$ Hz calculé à partir des expressions suivantes :

Courant pour compenser le déséquilibre naturel du réseau :

$$\overline{I_{CompNatUnbal}} = \frac{\overline{V_{NUnbal}}}{-j \cdot X_C^{f0}}$$

l'angle de $I_{compNatUnbal}$ : $\Omega_{compNatUnbal}$ ayant pour résultat = $\Omega_{NUnbal} + 90°$

Courant pour obtenir une tension souhaitée :

$$\overline{I_{VDesired}} = \frac{-\overline{V_{VDesired}}}{-j \cdot X_C^{f0}}$$

l'angle de $I_{VDesired}$ : $\Omega_{VDesired}$ ayant pour résultat = $\Omega_{VDesired}$ - 90°

où $\overline{V_{VDesired}}$ est la tension à laquelle le neutre du réseau doit être soumis.

Par conséquent, l'intensité à injecter par le convertisseur serait :

$$\overline{I_{to\_inject}} = \overline{I_{CompNatUnbal}} + \overline{I_{VDesired}}$$

9. Système selon l'une quelconque des revendications précédentes, dans lequel ledit système (11) est compris dans un seul enveloppement.

10. Système selon l'une quelconque des revendications précédentes, dans lequel ledit système est compris dans des enveloppements indépendants.

11. Système selon l'une quelconque des revendications 1 à 10, dans lequel ledit neutre (17) est un neutre du transformateur de puissance (12).

12. Système selon l'une quelconque des revendications 1 à 11, dans lequel ledit neutre est un neutre créé à partir d'éléments auxiliaires.

a)

b)

c)

d)

e)

f)

g)

**FIG. 1**

**FIG. 2**

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 304823 A
- DE 10307668 B3
- JP 2006109567 A
- EP 0164321 A1